Europäisches Patentamt

European Patent Office

Office européen des brevets

(11) Veröffentlichungsnummer: **0 059 332**
**A1**

## (12) EUROPÄISCHE PATENTANMELDUNG

(21) Anmeldenummer: **82100801.8**

(22) Anmeldetag: **04.02.82**

(51) Int. Cl.³: **H 02 G 15/18**

(30) Priorität: **04.03.81 DE 3108126**

(43) Veröffentlichungstag der Anmeldung:
**08.09.82 Patentblatt 82/36**

(84) Benannte Vertragsstaaten:
**AT BE CH FR IT LI LU NL SE**

(71) Anmelder: **KRONE GmbH**
**Goerzallee 311**
**D-1000 Berlin 37(DE)**

(72) Erfinder: **Rott, Joachim**
**Prinz-Handjery-Strasse 49a**
**D-1000 Berlin 37(DE)**

(74) Vertreter: **Patentanwälte Beetz sen. - Beetz jr. Timpe -**
**Siegfried - Schmitt-Fumian**
**Steinsdorfstrasse 10**
**D-8000 München 22(DE)**

(54) Selbstdichtender Verschluss für rohrförmige Kabelmuffen.

(57) Bei einem Verschluß für rohrförmige Kabelmuffen aus längsgeschlitzter Meterware schrumpfbaren Materials weisen zur Vermeidung der Verwendung von Klammern oder anderen Zusatzeinrichtungen die Verschlußkanten des Kabelmuffenrohrs (1) zwei miteinander kraftschlüssig korrespondierende, selbstdichtende Profile (8, 12) auf, deren eines als Aufnahme-Profil (8) mit quadratischem Hohl-Querschnitt (2) und einer sich verjüngenden Einführöffnung (3) unter Bildung zweier Haken (4, 5) ausgebildet ist, die mit äußeren Anlageflächen (6, 7) zur Selbstdichtung versehen sind, und deren anderes als Steckprofil (12) aus einer in das Aufnahme-Profil (8) einsteckbaren Spreizvorrichtung (9) besteht, die einen pfeilförmigen Querschnitt und zur Anlage an den äußeren Anlageflächen (6, 7) passende innere Anlageflächen (10, 11) zur Selbstdichtung aufweist.

Fig.4

0059332

## Selbstdichtender Verschluß für rohr-
## förmige Kabelmuffen

Die Erfindung betrifft einen selbstdichtenden Verschluß für rohrförmige Kabelmuffen aus längsgeteilter Meterware schrumpfbaren Materials.

Aus der DE-OS 28 20 181 ist ein Verschluß für ein längsgeschlitztes Kabelmuffenrohr bekannt. Das Kabelmuffenrohr weist im Verschlußbereich sich überlappende Ränder auf. Es werden zwei übereinander liegende Sicken ineinander gesteckt. Nachteilig ist hierbei die zusätzliche Anordnung einer Stützklammer, die über dem äußeren Wulst des Kabelmuffenrohres fest montiert wird.

Der Erfindung liegt die Aufgabe zugrunde, einen selbstdichtenden Verschluß für rohrförmige Kabelmuffen zu konstruieren, der ohne die Verwendung von Klammern oder sonstigen zusätzlichen Einrichtungen in einfachster Weise kostengünstig herstellbar ist.

Diese Aufgabe wird erfindungsgemäß dadurch gelöst, daß die Verschlußkanten miteinander kraftschlüssig korrespondierende, selbstdichtende Profile aufweisen, deren eines als Aufnahme-Profil mit quadratischem Hohl-Querschnitt und einer sich verjüngenden Einführöffnung unter Bildung von zwei Haken ausgebildet ist, die mit äußeren Anlageflächen zur Selbstdichtung versehen sind, und deren anderes als Steck-Profil aus einer in das Aufnahme-Profil einsteckbaren Spreizvorrichtung besteht, die einen pfeilförmigen Querschnitt und zur Anlage an den äußeren Anlageflächen passende innere Anlageflächen zur Selbstdichtung aufweist.

Vorteilhafte weitere Ausgestaltungen der einzelnen Merkmale der Erfindung sind in den Unteransprüchen gekennzeichnet.

In den Zeichnungen sind Ausführungsbeispiele der Erfindung dargestellt. Es zeigen:

Fig. 1    den Querschnitt der Verschluß-
          kanten-Profile im zusammenge-
          steckten Zustand,

Fig. 2     das Kabelmuffenrohr mit einem Innenlappen im Perspekt-Querschnitt,

Fig. 3     das Kabelmuffenrohr mit einseitig
verschobenen Verschlußkanten-Profilen im Querschnitt,

Fig. 4     die Verschlußkanten-Profile mit dem
einfachen Aufnahme-Profil und dem
einfachen Steck-Profil im Querschnitt,
und

Fig. 5     die Verschlußkanten-Profile mit dem
kaskadenartigen Aufnahme-Profil und
dem kaskadenartigen Steck-Profil im
Querschnitt.

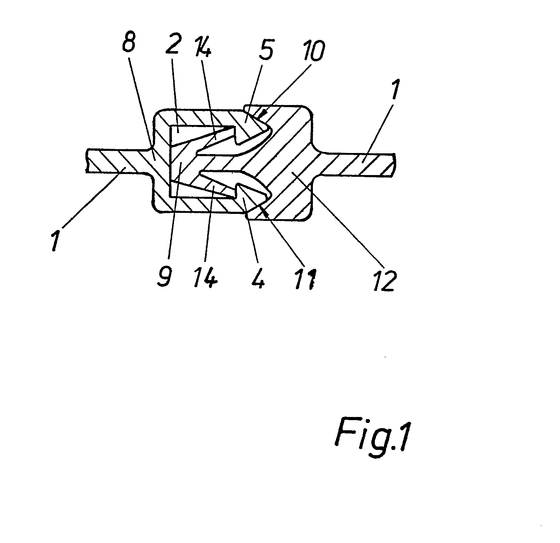

Wie die Fig. 1 zeigt, erfolgt der selbstdichtende Längsverschluß des Kabelmuffenrohres 1 an der
Verbindungsstelle durch Verrasten des Steck-Profils
12 mit dem Aufnahme-Profil 8.

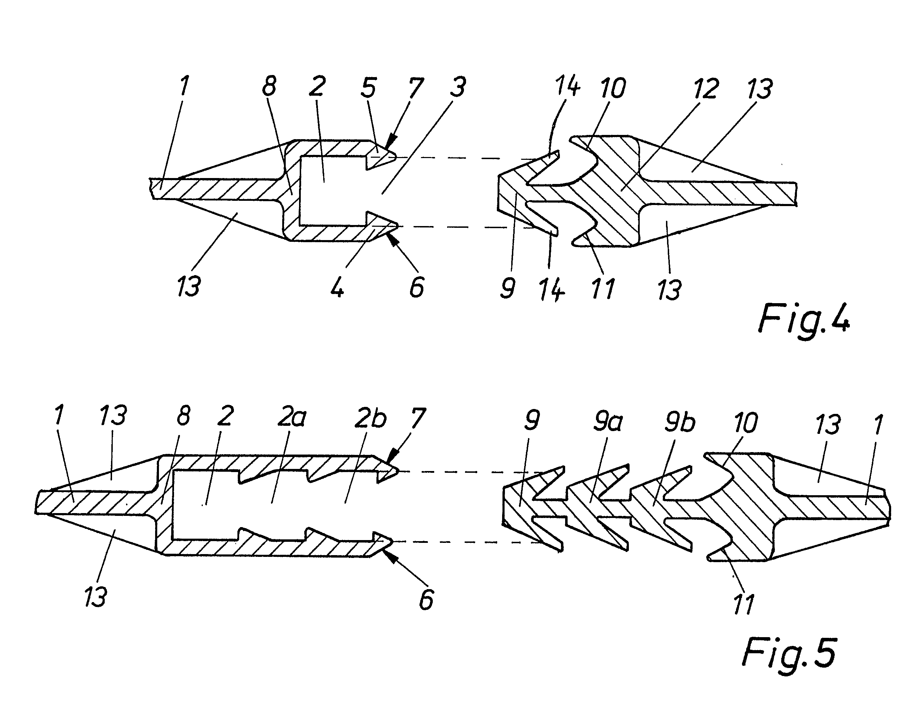

Die Fig. 4 und 5 zeigen deutlich, daß das Maß
der beiden Spreizarme 14 der pfeilartigen Spreizvorrichtung 9 größer als das Innenmaß des quadratischen Querschnitts 2 des Aufnahme-Profils 8 ist.

Die Spreizarme 14 drücken nach dem Zusammenrasten mit einem Anpreßdruck gegen die Innenwandung
des quadratischen Querschnitts 2.

Ferner liegen zusätzlich in vorteilhafter Weise, wie die Fig. 1, 4 und 5 zeigen bzw. erkennen lassen, die an den Haken 4, 5 der sich nach innen verjüngenden Einführungsöffnung 3 des Aufnahme-Profils 8 angeordneten äußeren Anlageflächen 6, 7 an den Anlageflächen 10, 11 hinter der Spreizvorrichtung 9 des Steck-Profils 12 dichtend unter einem Anpreßdruck an.

Durch diese vorteilhafte Anordnung dienen die Anlageflächen 6, 7 und 10, 11 auch zur Stabilisierung des Verschlusses.

Als weiteres Ausführungsbeispiel zeigt die Fig. 5, daß sowohl beim Aufnahme-Profil 8 als auch beim Steckprofil 12 mehrere quadratische Querschnitte 2, 2a, 2b bzw. pfeilartige Spreizvorrichtungen 9, 9a, 9b kaskadenartig hintereinander angeordnet sind.

Auch können Stützrippen 13, wie in den Fig. 4 und 5 gezeigt, zur Stabilisierung im hinteren Bereich des Aufnahme-Profils 8 und des Steckprofils 12 angeformt sein.

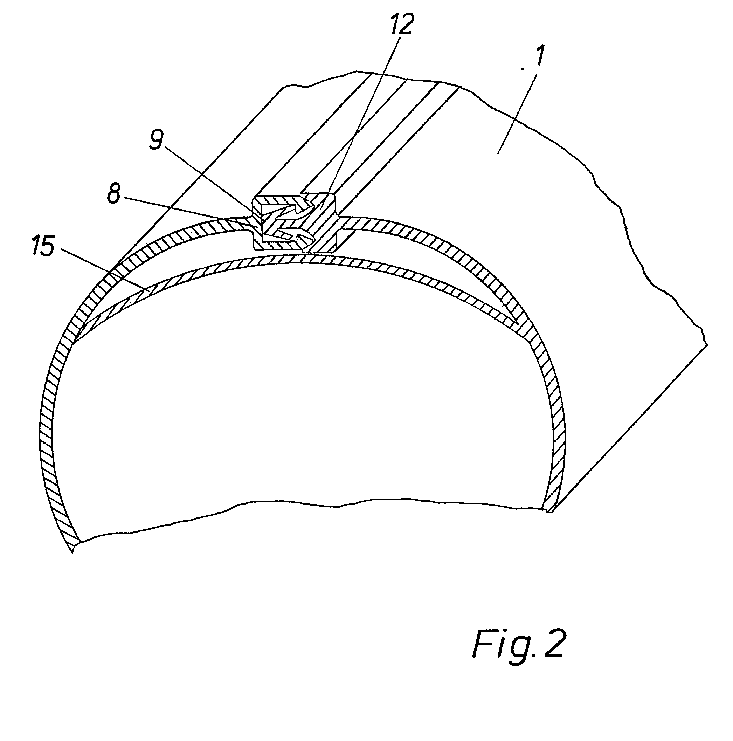

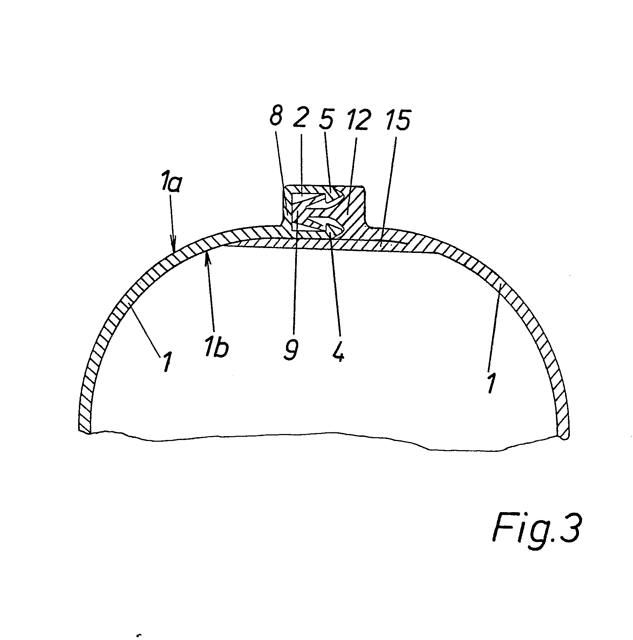

In den Fig. 2 und 3 sind Ausführungsformen dargestellt, die eine glatte Innenfläche im Inneren des Kabelmuffenrohres 1 ermöglichen.

So zeigt die Fig. 2, daß durch Anformen eines Innenlappens 15 an das Kabelmuffenrohr 1, der die nach innen vorragenden Kantenprofile 8 und 12 abdeckt, in einfachster Weise eine glatte Innen-Wandung entsteht.

Auch kann der Verschluß einseitig an der Außenfläche 1a des Kabelmuffenrohres 1 vorragend ausgebildet werden, wie die Fig. 3 zeigt, so daß direkt oder mit einem angeformten Innenlappen 15 eine glatte Innenwandung 1b entsteht.

Ansprüche
---------------

1. Verschluß für rohrförmige Kabelmuffen aus längsgeschlitzter Meterware schrumpfbaren Materials,

dadurch gekennzeichnet,

daß die Verschlußkanten miteinander kraftschlüssig
korrespondierende, selbstdichtende Profile (8, 12)
aufweisen, deren eines als Aufnahme-Profil (8) mit
quadratischem Hohl-Querschnitt (2) und einer sich
verjüngenden Einführöffnung (3) unter Bildung von
zwei Haken (4, 5) ausgebildet ist, die mit äußeren
Anlageflächen (6, 7) zur Selbstdichtung versehen
sind, und deren anderes als Steck-Profil (12) aus
einer in das Aufnahme-Profil (8) einsteckbaren
Spreizvorrichtung (9) besteht, die einen pfeilförmigen Querschnitt und zur Anlage an den äußeren Anlageflächen (6, 7) passende innere Anlageflächen
(10, 11) zur Selbstdichtung aufweist.

2. Verschluß nach Anspruch 1,
dadurch gekennzeichnet,
daß sowohl beim Aufnahme-Profil (8) als auch beim
Steck-Profil (12) mehrere quadratische Hohl-Querschnitte (2, 2a, 2b) bzw. pfeilartige Spreizvorrichtungen (9, 9a, 9b) kaskadenartig hintereinander
angeordnet sind (Fig. 5).

125-(x 2171-81-2)-TE

3. Verschluß nach Anspruch 1,

   dadurch gekennzeichnet,

   daß am Aufnahme-Profil (8) und am Steck-Profil (12) Stützrippen (13) im hinteren Bereich angeordnet sind.

4. Verschluß nach Anspruch 1,

   dadurch gekennzeichnet,

   daß im Inneren des Kabelmuffenrohres (1) ein Innenlappen (15) angeformt ist, der die Profile (8, 12) abdeckt.

5. Verschluß nach Anspruch 1 oder 4,

   dadurch gekennzeichnet,

   daß die Profile (8, 12) einseitig an der Außenfläche

   (1a) des Kabelmuffenrohres (1) vorragend ausgebildet sind, so daß eine glatte Innenwandung (1b) darin entsteht.

Bezugszeichenliste
------------------

| | |
|---|---|
| 1 | Kabelmuffenrohr |
| 1a | Außenfläche |
| 1b | Innenwandung |
| 2,2a,2b | quadratischer Querschnitt |
| 3 | Einführöffnung |
| 4,5 | Haken |
| 6,7 | Anlagefläche |
| 8 | Aufnahme-Profil |
| 9,9a,9b | Spreizvorrichtung |
| 10,11 | Anlageflächen |
| 12 | Steck-Profil |
| 13 | Stützrippen |
| 14 | Spreizarme |
| 15 | Innenlappen |

*Fig.1*

Fig.2

8 2 5 12 15

1a

1

1b

9 4

1

Fig.3

Fig.4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A-1 585 488 (COMP. FR. DES ISOLANTS) * Seite 1; Seite 2, Zeilen 1-15, 33-42; Seite 3; Seite 4, Zeilen 1-5, 26-38; Figuren 1-5, 16-19 * & DE - A - 1 947 057 | 1,5 | H 02 G 15/18 |
| A | FR-A-2 325 219 (THOMPSON) * Seite 4, Zeile 19 - Seite 6, Zeile 39; Figuren 1-4 * | 1,5 | |
| A | US-A-3 846 575 (RELIABLE EL.) * Spalte 4, Zeile 55 - Spalte 5, Zeile 54; Figuren 1,8-13 * | 1,5 | |
| A | EP-A-0 023 418 (EGERTON) * Seite 6, Zeile 5 - Seite 11, Zeile 15; Figuren 1-5 * | 1,4,5 | |
| A,D | DE-A-2 820 181 (SIEMENS) * Seite 5, letzter Absatz; Figuren 1,2 * | 1,4,5 | RECHERCHIERTE SACHGEBIETE (Int. Cl. 3)<br><br>H 02 G 15/00<br>B 29 C 25/00<br>F 16 L 47/00 |

Der vorliegende Recherchenbericht wurde für alle Patentansprüche erstellt.

| Recherchenort | Abschlußdatum der Recherche | Prüfer |
|---|---|---|
| DEN HAAG | 09-06-1982 | LOMMEL A. |